# EUROPEAN PATENT APPLICATION

(11) **EP 2 524 606 A1**
(43) Date of publication of application: **21.11.2012**
(21) Application number: 11004100.1
(22) Date of filing: 18.05.2011
(51) Int. Cl.: A23L 3/28, A61L 2/10, B65B 55/08

(54) **A system and a process for treating a target like food by UV radiation**

(71) Applicant: Heraeus Noblelight GmbH, 63450 Hanau (DE)
(72) Inventor: Dieudonné, Walter, 63801 Kleinostheim (DE); Dethlefs, Marc, 63538 Großkrotzenburg (DE)
(74) Representative: Kühn, Hans-Christian

(57) **Abstract**

The invention relates to a system for controlling an emitter (2), comprising as system parts
a. an emitter (2),
b. an energy supply (3) for supplying electric energy to the emitter (2)
c. a UV radiation sensor (4) arranged to the emitter (2) for receiving at least a part of the UV radiation emitted by the emitter (2) in operation,
d. a temperature sensor (5) arranged to the emitter (2) for receiving at least a part of the heat radiation emitted by the emitter (2) in operation,
e. a ventilation unit (6) for cooling the emitter (2),
f. a control unit (7) at least capable for i. collecting information from the UV radiation sensor (4) and the temperature sensor (5) and ii. controlling the energy supply (3) and the ventilation unit (6) in accordance to the information collected from the UV radiation sensor (4) and the temperature sensor (5);

wherein the emitter comprises a code readable by the control unit (7).

## Description

Generally the present invention relates to a system for controlling an emitter, in particular used in food processing or packaging, a process for producing a treated target, in particular food or a packaging or both, and the use of such a system or such a process or both for preserving food.

It is a global trend in food industry to preserve food with superior results regarding freshness, taste and appearance by applying an environmental sustainable treatment to food or food ingredients or packaging of food or food ingredients. In the recent years, due to consumer demands, the requirements regarding food safety have also significantly increased.

Quite promising attempts in order to perform food preservation by applying UV-light, in environmental sustainable conditions and with avoiding the use of chemicals, have been made by Heraeus Noblelight GmbH. From these attempts it is state of the art to provide the radiation to food or to a packaging or to both in order to improve the preservation of food and the restorability of packed food. UV radiation by use of emitters has also been quite successfully employed when storing food, in particular unpacked food, in warehouses, for example when storing meat or fruits in cooling houses. These quite successful attempts, however, still need improvement due to increased customer demands.

It is therefore in generally an object of the present invention to at least partially overcome the defects of the prior art. A further object of the present invention is to provide a system which can be operated more reliably, safely and which even more appropriately meets the requirements of the customers with regard to environmental sustainability including energy efficiency and safety. Moreover, it is an object of the present invention to provide a process which also serves at least one of these benefits.

A contribution to at least a part of these objects is provided by the subject matter of the category forming claims. The subject matter of the claims depending on these category forming claims describes preferred embodiments that also solve at least a part of these objects.

A contribution to at least a part of the above-mentioned objects provides a system for controlling an emitter, comprising as system parts
a. an emitter,
b. an energy supply for supplying electric energy to the emitter
c. a UV radiation sensor arranged to the emitter for receiving at least a part of the UV radiation emitted by the emitter in operation,
d. a temperature sensor arranged to the emitter for receiving at least a part of the heat radiation emitted by the emitter in operation,
e. a ventilation unit for cooling the emitter,
f. a control unit at least capable for i. collecting information from the UV radiation sensor and the temperature sensor and ii. controlling the energy supply and the ventilation unit in accordance to the information collected from the UV radiation sensor and the temperature sensor,
wherein the emitter comprises a code readable by the control unit.

It is preferred that an emitter or a plurality of emitters according to the present invention can have any size and design known to the persons skilled in the art and suitable for the application according to the present invention. It is, however, preferred to employ an emitter or emitters which provide at least 50 % of their radiation energy in the wave length range of 100 to 400 nm, preferably in the range of 100 to 380 nm and most preferably in the range of 120 to 350 nm. Quite often emitters emitting radiation according to DIN 5031 are employed. These emitter are usually called "UV-emitters". The emitter preferably comprises a base of a transparent material, in particularly china, and a transparent chamber comprising at least two electrical contacts being connected with the energy supply. The emitter according to the present invention, however, comprises an appropriate mixture of gas, metals, metal oxides, metal halides or noble metals or mixtures thereof in order to provide UV-radiation. The base of the emitter of the present invention can usually be received in a fitting which is provided between the energy supply and the base of the emitter. The emitter of the present invention also comprises a code readable by the control unit. This code can be located in every portion of the emitter. It also can be generated when combining the base and the fitting when the emitter is provided to its location in the system, comprising an emitter arrangement of several emitters. The code readable for the control unit can be any code or signal or both which can be transmitted from the emitter to the control unit. According to the present invention it is preferred that the code is an optical code, an electrical code or an acoustic code or a combination of at least two thereof. In case of an optical code, such as a barcode, the optical code is read by a reading unit which can be connected to or can be a part of the control unit. If the code is an electrical code, such as a current or a voltage or both, the electrical code is determined by an electrical determining unit such as a magnet, a transistor, or a capacitor or a combination of at least two thereof, and transferred to the control unit. In case the code is an acoustic code, such as an ultrasonic signal, this code is detected by an acoustic detection unit and transferred to the control unit. Independent of the nature of the code and also independent whether the code is generated or deposited in the emitter, the base or the fitting or at least two thereof, the code is preferably compared in the control unit with a control code. In the case that the code and the control code differ, it is preferred that no energy is supplied to the emitter or that an operator, preferably via a host unit, is informed. Emitters are generally commercial available from Heraeus Noblelight GmbH, Germany.

According to the present invention it is preferred that the energy supply for supplying energy to the emitter can be any energy supply known to the skilled person and suitable for operating emitters, in particular UV-emitter. Preferably the energy supply comprises a high-voltage generator and a current generator which preferably can be altered. Energy supplies can be commercially obtained by Nedap AG in the Netherlands or ZED GmbH in Germany.

According to the present invention it is preferred to employ any UV-radiation sensor known by the skilled person and being appropriate for the purpose of the present invention, in particular to sense the intensity of the UV-radiation of the emitter. A preferred UV-radiation sensor may comprise a photo multiplayer, which converts the received radiation into an electronic signal, which can be conveyed to the control unit. Commercial UV-radiation sensors are available from Giga Hertz-Optik Vertriebsgesellschaft mbH, Germany of SG Lux Sol-Gel Technologies GmbH. Germany .

It is preferred to arrange the UV-radiation sensor to the emitter in a fashion that a characteristic portion of the UV-radiation of the emitter is collected by the UV-radiation sensor. Preferably, the radiation collected by the UV-radiation sensor ranges from 200 to 300 nm, more preferably from 210 to 290 nm and most preferably from 230 to 270 nm. This holds in particular if the system of the present invention is used for treating water, preferably for reducing the content of microorganisms in water. It is further more preferred to arrange the UV-radiation sensor to the emitter in such a way that only a small amount of the allover radiation emitted by the emitter is received the UV-radiation sensor. This, for example, can be accomplished by using radiation transport units, such as transparent wires made from glass or plastic. This allows spotting the radiation emitted by the emitter in two or more positions along the emitter.

According to the present invention it is preferred to employ a temperature sensor known by the skilled person to be appropriate for the purpose of the present invention, in particular to determine the heat generated by the emitter. It is preferred that the temperature sensor determines the temperature of the gas, in particular air, in a portion where the heat emitted by the emitter is dominant in order to allow the determination of a temperature clearly related to the operation of an emitter. Typical temperature sensors are electronic temperature sensors, such as electronic thermometers or integrated circuits, commercially available by Heraeus Sensor Technology GmbH, Germany or Maxim Integrated Products, Inc. CA, USA.

According to the present invention it is further preferred to use any ventilation units known by the skilled person capable of providing a cold gas flow, in particular air flow, to the emitter in order to control the temperature of the emitter in operation. Such a ventilation unit preferably comprises vans or pumps or a combination of both. The ventilation unit preferably also comprises gas flow guiding units such a nozzles or slots or a combination thereof for providing a focussed gas stream onto the emitter to assure an appropriate temperature. If parts of the system are surrounded by a housing, it is also preferred that the ventilation unit comprises a gas inlet and a gas outlet. In these cases it is preferred to provide the vans or pumps outside the housing. It also preferred that the ventilation unit comprises means for controlling the moisture or for cleaning the gas used by the ventilation unit or both. Ventilation units are commercially available EBM-Papst GmbH, Germany.

According to the present invention it is preferred that the control unit can be a device known by the skilled person being capable of collecting information from system parts and controlling the appropriate system parts of the system of the present invention. Preferable control units are computers, which preferably comprise a data carrier comprising information such as a correct code, operation details, such as maximum temperature, minimum radiation, duration of radiation periods at which the emitter were in operation and the like. The control unit also preferably comprises a micro processor capable of processing the incoming information like from the UV-sensor, the temperature sensor or the code or all, comparing at least a part of this information or all the information with the data stored in the before-mentioned data carrier. In case the system parts of the system are surrounded by a housing, it is preferred to locate the control unit outside the housing. Typical control units are commercially available by Heraeus Noblelight GmbH.

The system according to the present invention can also comprise further devices, units or means beneficial for operating the system. In this respect it is preferred that the emitter is combined with at least one reflector in order to focus the radiation emitted by the emitter to a target. A further means for improving the focus of the radiation to the target is an optical device, preferably comprising at least one lens, wherein this optical device is preferably positioned adjacent to the emitter.

According to a preferred embodiment of the present invention, the control unit is connected with a host unit for exchanging information, wherein the host unit is capable of being connected with at least one or at least two control units. It is preferred that the at least one or at least two control units and the host unit are geographically separated. In this connection it is preferred that the host unit and the at least one or at least two control units are separated by at least 1 km, preferably at least 10 km and more preferably by at least 50 km. The connection for exchange of information is preferably accomplished electronically, preferably by means of broadcasting, internet or a combination thereof. It is preferred that the host unit is located at the side of the supplier of the system in order to determine the demands and needs of the customers using the system. Accordingly, it is preferred to exchange information such as the use of inappropriate emitters due to wrong codes, the operation time of the emitters based on radiation periods or the fulfillment of minimum UV-radiation remittance by the emitter or a combination of at least two thereof. The at least two control units can be positioned at different sites or at the same site. An example for at least two control units being positioned at the same site is a food processing and packaging unit comprising a first control unit being a part of a first system for UV-radiation treatment of food and a further control unit being a part of a further system for UV-radiation treatment of the packaging, in particular prior to combining the food and the packaging when wrapping the food.

According to a preferred embodiment of the present invention, the parts a. to e. are comprised in a housing, wherein the housing comprises a radiation emitting portion and wherein the system comprises a radiation target facing the radiation emitting portion and wherein the radiation target is positioned outside the housing. It should, however, be understood that according to the present invention the system could also comprise a radiation target even without a housing comprising the parts a. to e.. It is preferred that the housing is designed in fashion which allows to control the temperature within the housing, preferably the temperature of the emitter, by means of the ventilation unit. Accordingly, a housing is preferably made from material such as metal, plastic or both. The housing should also provide protection to the emitter, if the system is operated under heavy duty such as in a slaughterhouse or in fruit, beets or root processing. The radiation emitting portion should be designed in a way that it does not sufficiently hinder the UV-radiation to get from the emitter to the radiation target.

According to a further embodiment of the present invention it is preferred that the radiation target is food, an adhesive, a lacquer, a packaging or a combination of at least two thereof. Food can be everything which can be consumed by humans or by animals. The meaning of food includes, but is not limited to, liquid foods such as beverages including water, solid food such as meat, fruits, grains, beets or roots or at least two thereof. Packaging means any material being suitable for wrapping food, including, but not limited to, cans, glasses, bottles, foils, films, caps, cartons, laminates or the like. Preferred adhesives are UV-activated adhesives, which preferably promote adhesion with a cross-linking reaction initiated by UV radiation. Typical commercial adhesives are available by Henkel KGaA, Germany. Preferred lacquers are UV-curable adhesives, which preferably with a cross-linking reaction initiated by UV radiation. Typical commercial lacquers are available by Hartmann Chemicals GmbH, Germany.

According to other preferred embodiments of the present the UV-radiation sensor is arranged to the radiation target for receiving at least a part of the UV-radiation reflected by the radiation target when the emitter is in operation. It can be the same UV-radiation sensors detecting the UV-radiation of the emitter or different UV-radiation sensors which mainly or even only determine the UV-radiation reflected by the radiation target. The information regarding the UV-radiation reflected by the radiation target is beneficial for controlling the UV-radiation of the emitter through the control unit.

According to another preferred embodiment of the present invention the temperature sensor is arranged to the radiation target for receiving at least a part of the heat radiation reflected by the radiation target when the emitter is in operation. Similar to the UV-radiation sensor also the same temperature sensor or two different temperature sensors can be used.

A further contribution to at least partially solve an object of the present invention is a process for producing a treated object, comprising the steps:
i) providing a system according to the present invention,
ii) verifying the code of the emitter via the control unit,
iii) generating UV radiation through the emitter and providing the UV radiation to a radiation target over a radiation period,
iv) detecting at least a part of the UV radiation by the UV radiation sensor and providing a UV radiation information to the control unit,
v) detecting at least a temperature by the temperature sensor and providing a temperature information to the control unit,
vi) controlling the UV generation of the emitter via the control unit at least based on the UV radiation information or the temperature information or both,
vii) obtaining the treated target.

It should be understood that the definitions and preferred embodiments of features mentioned in context of the system of the present invention also apply for the process of the present invention. In the present invention it is further preferred that if verifying the code of the emitter yields that an inappropriate emitter is used, the host unit is informed and according to one option, the operation of the particular emitter or even the hole process is stopped. It is further preferred that one particular emitter is operated over several radiation periods. The radiation periods preferably match with the period of performing the process for producing a treated target. For example radiation periods can match with one shift of producing a treated target in a site such as a canning factory or a beverage producer. With regard to the controlling of the UV-generation of the other control unit is preferred that the power output of the emitter is adjusted to the conditions for producing a treated target. In this connection it is preferred that these conditions are kept quite constant over a long period of time in order to assure a high quality of the treated target. One preferred means for assuring this is by employing the ventilation unit in order to keep the temperature of the emitter constant and thus assure a steady power output of the emitter. The UV-radiation target is preferably provided to the radiation target by moving the radiation target and the emitter relative to each other. Preferably this can be accomplished by conveying the radiation target under the emitter, for example by means of a conveyor belt, in order to perform the process of the present invention continuously.

According to a preferred embodiment of the process according to the present invention the amount of microorganism comprised in the treated target is lower than in the radiation target. This is preferably accomplished by disinfection through killing microorganism such as bacteria, viruses or both.

According to another preferred embodiment of the process according to the present invention at least the surface of the treated target comprises more oxides than at least the surface of the radiation target. It is preferred that the UV-radiation facilitates oxidization reactions in or on the treated target. Preferably ozone is generated by the UV-radiation in order to facilitate the oxidization of the treated target.

According to a preferred embodiment according to the present invention the UV-radiation of a first radiation period is compared with the UV-radiation of a further radiation period. This can be accomplished in the control unit or in the host unit or both. If the UV-radiation, in particular the power output or the UV-intensity or both, drops under the defined level, some measures should be taken in order to assure the high quality performance of the process. Measures could be an exchange of an emitter, an increase of the current or an increase of the cooling by the ventilation unit or at least two of these measures.

According to a further preferred embodiment according to the present invention the UV radiation generated by the emitter and detected by the UV radiation sensor shall have an initial value Vᵢ representing the UV radiation at the first operation of the emitter and a further value V_{f} at a further operation of the emitter after the first operation, wherein V_{f} is at least 50%, preferably at least 70% and more preferably at least 90%, of Vᵢ.

According to a further preferred embodiment according to the present invention at least the surface of the treated target has a hardness greater than at least the surface of the radiation target. Usually the hardness is determined in Shore. It is preferred that the difference in hardness amounts to a factor of at least 2, preferably of at least 10 and more preferably at least 20, based on the hardness of the radiation target. A particular preferred hardness is expressed in scratch resistance or surface hardness or both.

According a further embodiment of the process according to the present invention a radiated target is food and the food is radiated prior to being packed. This variant of the process of the present invention is in particular preferred in food processing when the food is disinfected or sterilized by UV-radiation.

According to another preferred embodiment according to the process of the present invention the radiation target is a packaging and the packaging is radiated prior to being contacted with food. The variant of the process of the present invention is preferably applied in food packaging lines when the food is packed in aseptic containers which have to be sterilized or disinfected prior to being filled with the food by UV-radiation.

A further contribution to the solution of at least a part of object provides the use of the system according to the present invention or the process according to the present invention or both for preserving food or treating air. This particularly applies when food is stored, in particular when meat or meat products, such as sausages, are stored in cooling houses. Regarding the air treatment, it is preferred to reduce odor, germs or fat or at least two thereof.

The above mentioned and other features and advantages of the invention will be apparent from the following description, by way of examples of embodiments according to the invention with reference to the accompanying figure.

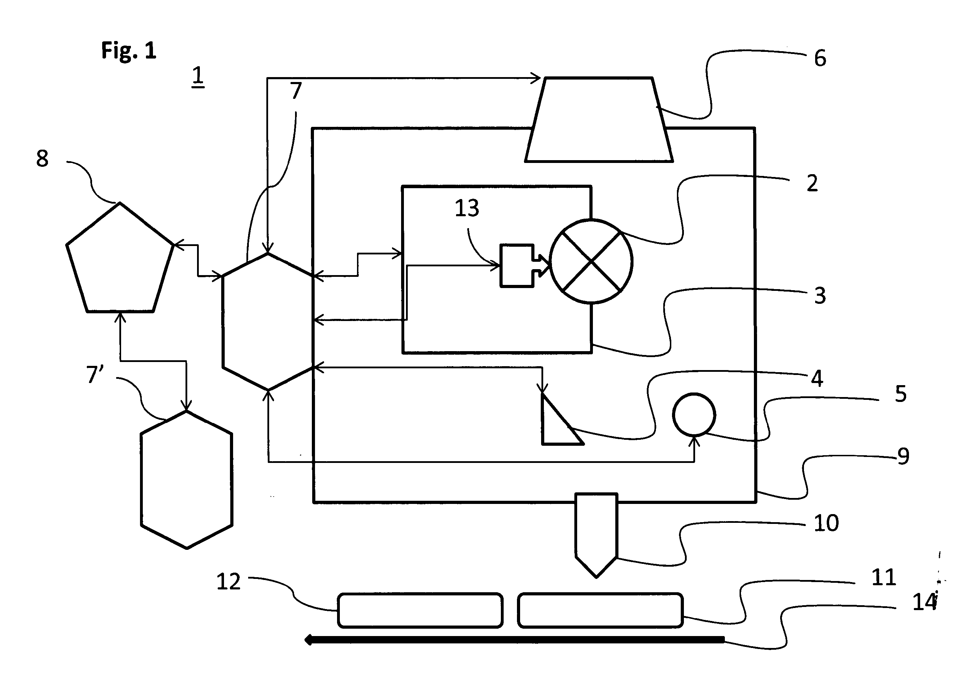

Fig. 1 shows a system 1 according to the present invention comprising an emitter 2 provided with energy through an energy supply 3 and emitting UV-radiation which is received by a UV-radiation sensor 4 and generating heat which is determined by a temperature sensor 5. In order to control the temperature of the emitter 2 a ventilation unit 6 is provided. The energy supply 3, the UV-radiation sensor 4, the temperature sensor 5 and the ventilation unit 6 are connected to a control unit 7 being capable of reading and processing the information of the UV-sensor 4 and the temperature sensor 5 in order to control the ventilation unit 6 and the energy supply 3 to the emitter 2. The control unit 7 is connected to a host unit 8, a control unit 7 is located outside a housing 9 covering the emitter 2, the energy supply 3, the UV-radiation sensor 4, the temperature sensor 5, the ventilation unit 6 and an emitting portion 10, allowing the UV-radiation to exit the housing in direction to a radiation target 11 facing the emitting portion 10. In operation of the system 1, the control unit 7 assures via a code 13 of the emitter 2 that the appropriate emitter 2 in operation. The emitter 2 that is controlled by the control unit 7 based on the information of the UV-radiation sensor 4 and the temperature sensor 5 is also controlled by the energy supply 3 and the ventilation unit 6. The emitter 2 emits UV-radiation via an emitting portion through the housing 9 with the emitting portion 10 being directed on the radiation target 11. The radiation target 11 turns into a treatment target 12 when being transported under the emitting portion 10 with the conveyor 14.

### REFERENCES

- 1: System
- 2: Emitter
- 3: Energy supply
- 4: UV radiation sensor
- 5: Temperature sensor
- 6: Ventilation unit
- 7,7': Control unit
- 8: Host unit
- 9: Housing
- 10: Emitting portion
- 11: Radiation target
- 12: Treated target
- 13: Code
- 14: Conveyor

## Claims

1. A system (1) for controlling an emitter (2), comprising as system parts
a. an emitter (2),
b. an energy supply (3) for supplying electric energy to the emitter (2)
c. a UV radiation sensor (4) arranged to the emitter (2) for receiving at least a part of the UV radiation emitted by the emitter (2) in operation,
d. a temperature sensor (5) arranged to the emitter (2) for receiving at least a part of the heat radiation emitted by the emitter (2) in operation,
e. a ventilation unit (6) for cooling the emitter (2),
f. a control unit (7) at least capable for i. collecting information from the UV radiation sensor (4) and the temperature sensor (5) and ii. controlling the energy supply (3) and the ventilation unit (6) in accordance to the information collected from the UV radiation sensor (4) and the temperature sensor (5);
wherein the emitter comprises a code readable by the control unit (7).

2. The system (1) according to any of the preceding claims, wherein the control unit (7) is connected for exchanging information with a host unit (8), wherein the host unit (8) is capable of being connected with the control unit (7, 7').

3. The system (1) according to any of the preceding claims, wherein the parts a. to e. are comprised in a housing (9), wherein the housing (9) comprises a radiation emitting portion (10), and wherein the system comprises a radiation target (11) facing the radiation emitting portion (10), and wherein the radiation target (11) is positioned outside the housing (9).

4. The system (1) according to claim 3, wherein the radiation target is food, an adhesive, a lacquer or a packaging or a combination of at least two thereof.

5. The system (1) according to claims 3 or 4, wherein the UV radiation sensor (4) is arranged to the radiation target (11) for receiving at least a part of the UV radiation reflected by the radiation target (11) when the emitter (2) is in operation.

6. The system (1) according to any of the claims 3 to 5, wherein the temperature sensor (5) is arranged to the radiation target (11) for receiving at least a part of the heat radiation reflected by the radiation target (11) when the emitter (2) is in operation.

7. A process for producing a treated target (12) comprising the steps
i) providing a system (1) according to any of the preceding claims,
ii) verifying the code (13) of the emitter (2) via the control unit (7),
iii) generating UV radiation through the emitter (2) and providing the UV radiation to a radiation target (11) over a radiation period,
iv) detecting at least a part of the UV radiation by the UV radiation sensor (4) and providing a UV radiation information to the control unit (7),
v) detecting at least a temperature by the temperature sensor (5) and providing a temperature information to the control unit (7),
vi) controlling the UV generation of the emitter (2) via the control unit (7) at least based on the UV radiation information or the temperature information or both,
vii) obtaining the treated target (12).

8. The process according to claim 7, wherein the amount of micro organisms comprised in the treated target is lower than in the radiation target.

9. The process according to claims 7 or 8, wherein at least the surface of the treated target comprises more oxides than at least the surface of the radiation target.

10. The process according to any of the claims 7 to 9, wherein the UV radiation of a first radiation period is compared with the UV radiation of a further radiation period.

11. The process according to any of the claims 7 to 10, wherein the UV radiation generated by the emitter (2) and detected by the UV radiation sensor (4) shall have an initial value Vᵢ representing the UV radiation at the first operation of the emitter (2) and a further value V_{f} at a further operation of the emitter (2) after the first operation, wherein V_{f} is at least 50% of Vᵢ.

12. The process according to any of the claims 7 or 11, wherein at least the surface of the treated target has a hardness greater than at least the surface of the radiation target.

13. The process according to any of the claims 7 to 12, wherein the radiated target (11) is food and the food is radiated prior to being packed.

14. The process according to any of the claims 7 to 13, wherein the radiation target (11) is a packaging and the packaging is radiated prior to being contacted with food.

15. Use of a system according to any of the claims 1 to 6 or a process according to any of the claims 7 to 14 for preserving food or treating air.
